# EUROPEAN PATENT APPLICATION

(11) **EP 2 388 644 A2**
(43) Date of publication of application: **23.11.2011**
(21) Application number: 11177919.5
(22) Date of filing: 29.05.2008
(51) Int. Cl.: G02F 1/167, G02F 1/1335, G02F 1/13

(54) **E-Paper apparatus**

(30) Priority: 01.06.2007 TW 096119865
(62) Divisional of application: 08104163.4
(71) Applicant: Pervasive Display Co. Ltd., Tainan City 717 (TW)
(72) Inventor: Sah, Wen-Jyh, 700 Tainan City (TW)
(74) Representative: Schultenkämper, Johannes

(57) **Abstract**

An e-paper apparatus (2) includes a pixel array module, an e-paper body and a printing layer. The e-paper body is disposed over the pixel array module and includes an electrophoretic material and a transparent electrode layer. The transparent electrode layer is disposed opposite to the pixel array module. The printing layer is disposed on one side of the e-paper body.

## Description

### BACKGROUND OF THE INVENTION

### FIELD OF INVENTION

The invention relates to a display apparatus and, in particular, to an e-paper display apparatus.
The present application is a divisional application of the EP patent application No. 08 104 163.4 filed on May 29, 2008, the whole content of which is hereby incorporated by reference.

### RELATED ART

In the information era, the demands of users for communicating with information sources are increasing. Therefore, the display apparatus that can broadcast information has become one of the indispensable electronic products in modern life. The display apparatus has evolved from the cathode ray tube (CRT) display to the modem liquid crystal display (LCD) that is thinner and lighter. Accordingly, the LCD has been widely used in communications, information and consumer electronics. However, the LCD needs continuous power to maintain the operation of the LCD. Therefore, the display technology of electrophoretic display (EPD) with lower power consumption has been invented.

Now, computers are often used to process and store large amount of data. However, regarding the factors of volume, weight and operation, the computer is not as convenient in carrying and reading as the paper with printed information. To enjoy the portability and convenience in reading of paper while having the capabilities to process data and be environmentally friendly, the e-paper apparatus using the EPD is disclosed.

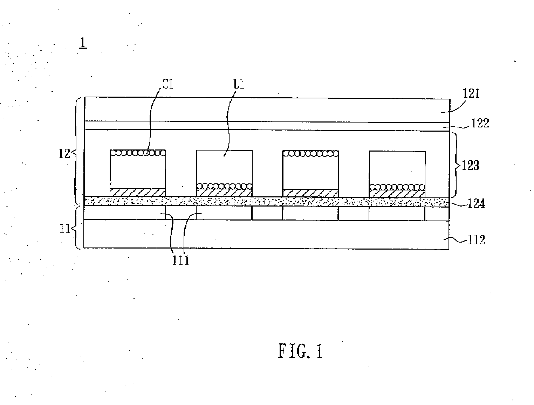

As shown in FIG. 1, according to the electrophoretic principle, a conventional e-paper (electronic paper) apparatus 1 can produce colors by driving electrically charged particles with an electric field. The e-paper apparatus 1 includes a driving substrate 11 and an e-paper body 12. The e-paper body 12 is disposed on the driving substrate 11. The driving substrate 11 has a patterned pixel electrode layer 111 and a lower substrate 112. The e-paper body 12 has an upper substrate 121, a transparent electrode layer 122, an electrophoretic material 123 and an adhesive layer 124. The electrophoretic material 123, including electrically charged particles C1 and a dielectric solvent L1, is sealed between the upper substrate 121 and the adhesive layer 124. The transparent electrode layer 122 is formed at one side of the upper substrate 121, and is disposed opposite to the pixel electrode layer 111.

When a voltage difference is applied between the pixel electrode layer 111 and the transparent electrode layer 122, the electrically charged particles C1 move toward the pixel electrode layer 111 or the transparent electrode layer 122, which carries charges with the polarity opposite to those of the electrically charged particles C1. Therefore, by selectively applying a voltage between the two electrode layers 111 and 124, the displayed color can be controlled to be the color of the dielectric solvent L1 or the color of the electrically charged particles C1. Then, the displayed color can be changed by applying a reverse voltage.

As shown in FIG. 1, the electrophoretic materials 123 between the upper substrate 121 and the adhesive layer 124 can be separately disposed in the microcups. In addition, the electrophoretic material 123 can be processed by the microencapsulation technology so as to encapsulate the electrically charged particles C1 and the dielectric solvent L1 into a capsule.

In order to achieve the object of full-color display, the separated electrophoretic materials 123 may respectively carry three primary colors (R, G and B). By properly arranging the separated electrophoretic materials 123, the full-color frame can be presented.

In addition, a plurality of color filters (not shown) may be formed on the e-paper body 12, and then the color filters are aligned with the driving substrate 11 so that the patterns of the color filters are aligned with the pixel electrode layer 111 on the driving substrate 11. Thus, the full-color can be displayed.

However, the conventional approach of achieving the full-color display is to use the complex manufacturing processes of the electrophoretic materials or to precisely align the color filters with the driving substrate 11. Therefore, the manufacturing cost of the e-paper apparatus 1 is increased.

Therefore, it is an important subject to provide an e-paper apparatus, which has the full-color displaying effect and may be manufactured with simplified steps and lowered cost.

### SUMMARY OF THE INVENTION

In view of the foregoing, the invention is to provide an e-paper apparatus, which has simple structure and lowered manufacturing cost.

To achieve the above, the invention discloses an e-paper apparatus including a pixel array module, an e-paper body and a printing layer. The e-paper body is disposed over the pixel array module and includes an electrophoretic material and a transparent electrode layer disposed opposite to the pixel array module. The printing layer is disposed on one side of the e-paper body.

As mentioned above, the e-paper apparatus of the invention has a printing layer with the printed pattern. The e-paper body can reflect the external light. Thus, when the reflected light passes through the printing layer, the user can see the printed pattern clearly. Accordingly, the e-paper apparatus of the invention does not need the complex aligning process of the conventional filters and still can achieve the full-color effect. In addition, the e-paper apparatus of the invention also provides several kinds of structures for driving the pixel array module.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic illustration showing a conventional e-paper apparatus;

FIG. 2 is a schematic illustration showing an e-paper apparatus according to a first embodiment of the invention;

FIG. 3 is a schematic illustration showing another e-paper apparatus according to the first embodiment of the invention;

FIG. 4 is a schematic illustration showing another e-paper apparatus according to the first embodiment of the invention;

FIG. 5 is a schematic illustration showing another e-paper apparatus according to the first embodiment of the invention;

FIG. 6 is a schematic illustration showing an e-paper apparatus according to a second embodiment of the invention; and

FIG. 7 is a schematic illustration showing another e-paper apparatus according to the second embodiment of the invention.

### DETAILED DESCRIPTION OF THE INVENTION

The present invention will be apparent from the following detailed description, which proceeds with reference to the accompanying drawings, wherein the same references relate to the same elements.

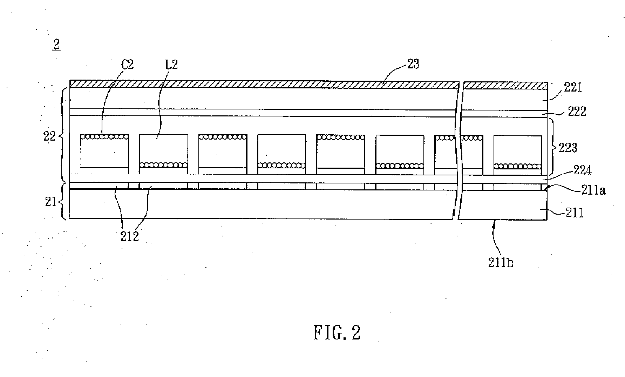

FIG. 2 is a schematic illustration showing an e-paper apparatus 2 according to a first embodiment of the invention. Referring to FIG. 2, the e-paper apparatus 2 includes a pixel array module 21, an e-paper body 22 and a printing layer 23.

In the embodiment, the pixel array module 21 includes a substrate 211 and a pixel electrode array 212.

The substrate 211 has a first surface 211a and a second surface 211b disposed opposite to the first surface 211a. In the embodiment, the substrate 211 can be a printed circuit board or a flexible circuit board depending on the actual design of the e-paper apparatus 2. The material of the substrate 211 may include glass, metal or a plastic material. In the present embodiment, the substrate 211 is, for example, a single-layer or dual-layer printed circuit board. Of course, the substrate 211 can also be a multilayer printed circuit board.

The pixel electrode array 212 is disposed on the first surface 211a of the substrate 211 and is composed of a plurality of electrodes, which are disposed on the first surface 211a of the substrate 211 by an array arrangement. In the embodiment, the pixel electrode array 212 is made of conductive material such as metal or transparent conductive material. Herein, the transparent conductive material is, for example but not limited to, indium tin oxide (ITO).

The pixel electrode array 212 can be a dot matrix array, which can be actively driven or passively driven. In the embodiment, the pixel electrode array 212 includes a plurality of transistors (not shown) for actively controlling the on/off of the pixel electrodes. In this case, the substrate 211 and the pixel electrode array 212 construct a thin-film transistor (TFT) driving substrate.

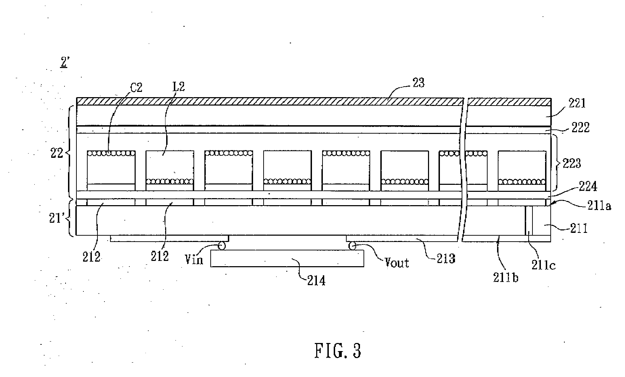

With reference to FIG. 3, the e-paper apparatus 2' includes a semiconductor circuit unit 214 for driving the pixel electrode array 212. In this embodiment, the pixel array module 21' further includes a first patterned conductive layer 213, which is disposed on the second surface 211b of the substrate 211. The first patterned conductive layer 213 and the pixel electrode array 212 are electrically connected through a via 211c. In addition, the semiconductor circuit unit 214 can be disposed on the second surface 211b of the substrate 211. The semiconductor circuit unit 214 has at least one input terminal Vin and at least one output terminal Vout. The output terminal Vout is electrically connected to the first conductive layer 213. In the embodiment, the semiconductor circuit unit 214 is, for example, a multiplexer (MUX). Alternatively, the semiconductor circuit unit 214 can be a chip having the function of the multiplexer. Moreover, the e-paper apparatus 2' can be electrically connected to an external circuitry for controlling the action of the multiplexer. In this case, the semiconductor circuit unit 214 transmits a driving signal to the pixel electrode array 212 so as to drive the pixel electrode array 212.

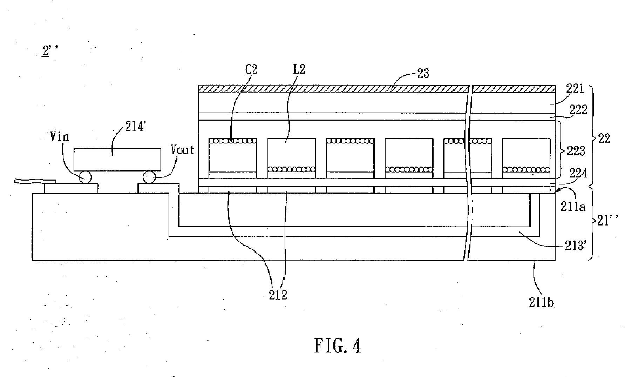

With reference to FIG. 4, the first patterned conductive layer 213' can be disposed between the first surface 211a and the second surface 211b of the substrate 211. The first patterned conductive layer 213' is electrically connected to part of the pixel electrode array 212.

The semiconductor circuit unit 214' is disposed on the first surface 211a of the substrate 211 and has at least one input terminal Vin and at least one output terminal Vout. The output terminal Vout is electrically connected to at least one part of the first patterned conductive layer 213'. The technical feature of the semiconductor circuit unit 214' is the same as that of the semiconductor circuit unit 214 of the previous embodiment, so the detailed description will be omitted.

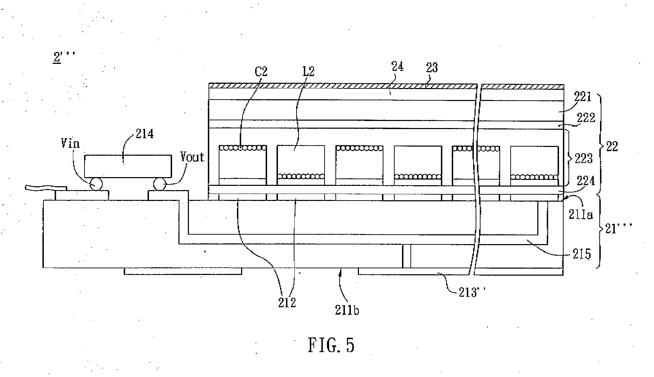

With reference to FIG. 5, the pixel array module 21‴ may further include a first patterned conductive layer 213" and a second patterned conductive layer 215. The first patterned conductive layer 213‴ is disposed on the second surface 211b of the substrate 211, and the second patterned conductive layer 215 is disposed between the first surface 211a and the second surface 211b of the substrate 211. The second patterned conductive layer 215 is electrically connected to the pixel electrode array 212, the first patterned conductive layer 213" and the output terminal Vout of the semiconductor circuit unit 214.

The e-paper apparatuses 2, 2', 2" and 2‴ will be described herein below with reference to FIGS. 2 to 5. The e-paper body 22 is disposed on the pixel array module 21, 21' 21" or 21‴. In addition, the e-paper 22 includes an upper substrate 221, a transparent electrode layer 222, an electrophoretic material 223 and an adhesive layer 224.

The transparent electrode layer 222 is disposed on one side of the upper substrate 221 and is located corresponding to the pixel electrode layer 212. In the embodiment, the material of the transparent electrode layer 222 may be indium tin oxide (ITO), aluminum zinc oxide (AZO), indium zinc oxide (IZO) or cadmium tin oxide (CTO).

The electrophoretic material 223 includes a plurality of pigment particles C2 and a dielectric solvent L2. The pigment particles C2 are charged particles and are dispersed over the dielectric solvent L2. In the embodiment, as shown in FIGS. 2 and 3, the e-paper body 22 includes a plurality of microcup structures for accommodating the electrophoretic material 223. Alternatively, the e-paper body 22 may include a plurality of micro-capsule structures for encapsulating the electrophoretic material 223. Either the microcup structures or the micro-capsule structures are prior arts, so the detailed description thereof will be omitted.

The adhesive layer 224 is disposed between the electrophoretic material 223 and the pixel array module 21, 21', 21" or 21''' for bonding the e-paper body 22 and the pixel array module 21, 21', 21" or 21"'.

The printing layer 23 is disposed on one side of the e-paper body 22 and is printed with a monochromatic or color pattern. In the embodiment, to form the printing layer 23, a pigment can be formed on one side of the upper substrate 221 by ink jetting or printing.

When the pixel electrode array 212 is driven by the transistor or the semiconductor circuit unit 214 or 214', a voltage difference will exist between the pixel electrode array 212 and the transparent electrode layer 222. Then, the pigment particles C2 are driven to move toward the pixel electrode array 212 or the transparent electrode layer 222 carrying the electric charges with the polarity counter to that of the pigment particles C2. According to the voltage optionally applied to two electrode layers, the displayed color can be controlled to be the color of the dielectric solvent L2 or the pigment particles C2. Furthermore, the displayed color can be changed by applying a reverse voltage. For example, when a voltage difference is applied, the white pigment particles C2 are driven to move toward the transparent electrode layer 222 so as to reflect external light rays. Then the reflected light rays pass through the printing layer 23 so as to display the pattern of the printing layer 23.

With reference to FIG. 5, the e-paper apparatus 2"' further includes a transparent substrate 24 adhered on one side of the upper substrate 221. In the embodiment, the printing layer 23 is formed on the surface of the transparent substrate 24 by ink jetting or printing. Then, the transparent substrate 24 printed with the printing layer 23 is adhered to the upper substrate 221. Herein, the transparent substrate 24 can be a flat plate or a film.

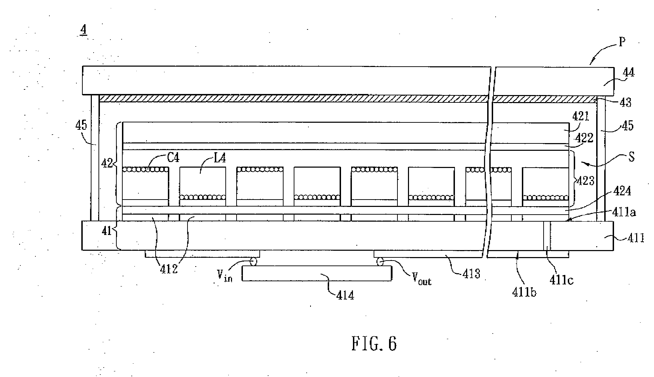

FIG. 6 is a schematic illustration showing an e-paper apparatus 4 according to a second embodiment of the invention. The e-paper apparatus 4 includes a pixel array module 41, an e-paper body 42 and a printing layer 43. The pixel array module 41 includes a substrate 411, a pixel electrode array 412, a patterned conductive layer 413 and a semiconductor circuit unit 414. The substrate 411 has a first surface 411a and a second surface 411b opposite to the first surface 411a. The pixel electrode array 412 is disposed on the first surface 411a of the substrate 411. The patterned conductive layer 413 is disposed on the second surface 411b of the substrate 411 and is electrically connected to the pixel electrode array 412. The semiconductor circuit unit 414 includes at least one input terminal Vin and at least one output terminal Vout, which is electrically connected to the patterned conductive layer 413.

The e-paper body 42 is disposed over the pixel array module 41 and includes an upper substrate 421, a transparent electrode layer 422, an electrophoretic material 423 and an adhesive layer 424. The printing layer 43 is disposed on one side of the e-paper body 42 and has a pattern.

The functions and features of the pixel array module 41 and the e-paper body 42 are the same as those of the pixel array module 21' and the e-paper body 22, so the detailed description will be omitted. Only the printing layer 43 of the embodiment will be described herein below.

In the embodiment, the e-paper apparatus 4 further includes a package structure P, which is connected to the pixel array module 41 to form a closed space S for accommodating the e-paper body 22. The package structure P includes a covering plate 44 and an adhesive 45. The adhesive 45 connects the covering plate 44 to the substrate 411 of the pixel array module 41. The covering plate 44 of the embodiment may be a transparent covering plate made of a glass material, and the printing layer 43 is formed on a surface of the covering plate 44 by ink jetting or printing. In the embodiment, the printing layer 43 is formed on the surface facing the e-paper body 42 for example. Of course, the printing layer 43 can be formed on the other surface of the covering plate 44 away from the e-paper body 42. As mentioned above, when the light rays reflected by the e-paper body 42 pass through the printing layer 43 formed on the covering plate 44, the user can see the pattern of the printing layer 43 clearly. To be noted, the printing layer 43 can be formed on either the upper surface or the lower surface of the covering plate 44. In the embodiment, the printing layer 43 is, for example, formed on the lower surface of the covering plate 44.

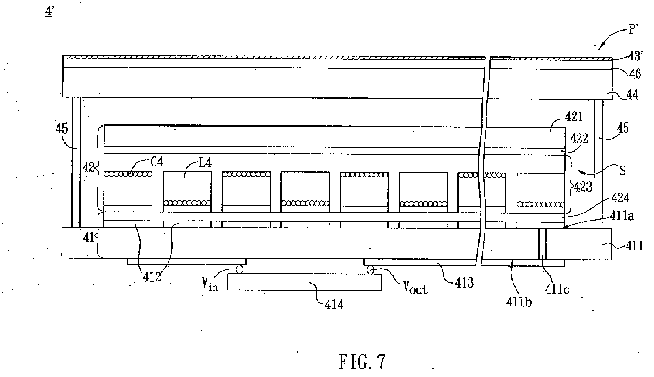

With reference to FIG. 7, the e-paper apparatus 4' further includes a printing substrate 46 disposed on the covering plate 44. In the embodiment, the printing layer 43' is disposed on a surface of the printing substrate 46 opposite to the covering plate 44 by way of ink jetting or printing. Then, the printing substrate 46 is disposed on a surface of the covering plate 44. To be noted, the printing substrate 46 can be disposed on either the upper surface or the lower surface of the covering plate 44. In the embodiment, the printing substrate 46 is, for example, disposed on the upper surface of the covering plate 44.

In summary, the e-paper apparatus of the invention has a printing layer with the printed pattern. The e-paper body can reflect the external light. Thus, when the reflected light passes through the printing layer, the user can see the printed pattern clearly. Accordingly, the e-paper apparatus of the invention does not need the complex aligning process of the conventional filters and still can achieve the full-color effect. In addition, the e-paper apparatus of the invention also provides several kinds of structures for driving the pixel array module. Moreover, the printing layer can be formed by coating the monochromic or color pigment on one side of the upper substrate, the transparent substrate or the covering plate. Then, when the light rays reflected by the e-paper body pass through the printing layer, the pattern of the printing layer can be displayed. In this case, to change the displayed pattern of the e-paper apparatus, the user can easily change the pattern of the printing layer or replace the upper substrate, the transparent substrate or the covering plate. This method is much simpler than the prior art and is much cheaper.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An e-paper apparatus (2), comprising:
a pixel array module (21);
an e-paper body (22), which is disposed over the pixel array module and comprises an electrophoretic material (223) and a transparent electrode layer (222) disposed opposite to the pixel array module; and
a printing layer (23) disposed on one side of the e-paper body.

2. The e-paper apparatus (4) according to claim 1, wherein the e-paper body (42) further comprises:
an upper substrate (421), wherein the transparent electrode layer (422) is disposed at one side of the upper substrate, and the transparent electrode layer is disposed between the upper substrate and the pixel array module (41).

3. The e-paper apparatus (4) according to claim 2, wherein the printing layer (43) is disposed on another side of the upper substrate (421).

4. The e-paper apparatus (4) according to claim 2, wherein the e-paper body (42) further comprises:
a transparent substrate (411) disposed on another side of the upper substrate (421), wherein the printing layer (43) is formed on a surface of the transparent substrate.

5. The e-paper apparatus (4) according to claim 1, further comprising:
a package structure (P) connected to the pixel array module (41) to form a closed space (S) for accommodating the e-paper body (22).

6. The e-paper apparatus (4) according to claim 5, wherein the package structure (P) comprises an adhesive (45) and a covering plate (44), the adhesive connects the covering plate to the pixel array module (41), and the printing layer (43) is disposed on a surface of the covering plate.

7. The e-paper apparatus (4) according to claim 6, further comprising:
a printing substrate (46) disposed on the covering plate (44), wherein the printing layer (43) is disposed on one side of the printing substrate opposite to the covering plate (44).
